# EUROPÄISCHE PATENTSCHRIFT

(11) **EP 4 067 582 B1**
(45) Veröffentlichungstag und Bekanntmachung des Hinweises auf die Patenterteilung: **26.02.2025**
(21) Anmeldenummer: 22161827.5
(22) Anmeldetag: 14.03.2022
(51) Int. Cl.: E03C 1/04, F16K 11/044, F16K 11/052, F16K 31/02, E03C 1/05

(54) **ZWEIWEGEVENTIL FÜR EINE SANITÄRARMATUR UND SANITÄRARMATUR MIT EINEM SOLCHEN ZWEIWEGEVENTIL**
TWO-WAY VALVE FOR A SANITARY FITTING AND SANITARY FITTING WITH SUCH A TWO-WAY VALVE
ROBINET À DEUX VOIES POUR UNE ROBINETTERIE ET ROBINETTERIE DOTÉE D'UN TEL ROBINET À DEUX VOIES

(30) Priorität: 30.03.2021 DE 102021108022
(43) Veröffentlichungstag der Anmeldung: 05.10.2022
(73) Patentinhaber: Grohe AG, 58675 Hemer (DE)
(72) Erfinder: Brand, Henning, 44263 Dortmund (DE); Hopfauf, Harry, 59494 Soest (DE); Tueshaus, Jan Philipp, 58675 Hemer (DE)

(56) Entgegenhaltungen:
- EP-A1- 2 886 822
- EP-B1- 2 064 469
- EP-B1- 3 467 358
- DE-A1- 102019 105 975
- DE-U1- 202020 107 143
- IT-A1- TO20 001 182

## Beschreibung

Die vorliegende Erfindung betrifft ein Zweiwegeventil für eine Sanitärarmatur gemäss dem Oberbegriff des Anspruchs 1 und eine Sanitärarmatur mit einem solchen Zweiwegeventil. Solche Sanitärarmaturen dienen insbesondere der bedarfsgerechten Bereitstellung einer Flüssigkeit an Waschbecken, Spülbecken, Duschen oder Badewannen.

Es sind Sanitärarmaturen bekannt, mit denen eine Flüssigkeit mit unterschiedlichen Strahlarten, beispielsweise in Form von Regenstrahlen, Vollstrahlen, Massagestrahlen oder Perlstrahlen, abgebbar sind. Die Umstellung zwischen den einzelnen Strahlarten kann über manuell betätigbare Betätigungselemente an den Sanitärarmaturen erfolgen, über die beispielsweise Ventile in Flüssigkeitskanälen der Sanitärarmaturen steuerbar sind, sodass die Flüssigkeit einem Strahlbildner für die gewünschte Strahlart zuführbar ist. Die bekannten Ventile weisen einen hohen Bauraumbedarf auf, sodass diese entweder nicht in die Sanitärarmaturen integriert werden können oder die Sanitärarmaturen besonders groß ausgeführt werden müssen. Dies schränkt jedoch die Gestaltungsfreiheit der Sanitärarmaturen ein und erhöht zudem deren Materialbedarf.

Es sind weiterhin Zweiwegeventile bekannt geworden, deren Ventilkörper durch Formgedächtnisdrähte verstellbar sind, beispielsweise aus EP 2 064 469 B1 und IT TO20 001182 A1. Darüber hinaus sind Zweiwegeventile, beispielsweise aus DE 10 2019 105 975 A1, sowie Formgedächtnislegierungsaktuatoren, beispielsweise aus DE 20 2020 107 143 U1, bekannt.

Aufgabe der Erfindung ist es daher, die mit Bezug auf den Stand der Technik geschilderten Probleme zumindest teilweise zu lösen und insbesondere ein Zweiwegeventil für eine Sanitärarmatur anzugeben, das einen geringen Bauraumbedarf aufweist. Zudem soll eine Sanitärarmatur angegeben werden, deren Zweiwegeventil einen geringen Bauraumbedarf aufweist.

Diese Aufgaben werden gelöst mit einem Zweiwegeventil und einer Sanitärarmatur gemäß den Merkmalen der unabhängigen Patentansprüche. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Zweiwegeventil für eine Sanitärarmatur bei, das zumindest Folgendes aufweist:
- ein Ventilgehäuse mit einem Flüssigkeitszulauf, einem ersten Flüssigkeitsablauf und einem zweiten Flüssigkeitsablauf; und
- einen Ventilkörper, der durch einen ersten Formgedächtnisdraht in eine erste Freigabestellung zur Freigabe des ersten Flüssigkeitsablaufs und durch einen zweiten Formgedächtnisdraht in eine zweite Freigabestellung zur Freigabe des zweiten Flüssigkeitsablaufs verstellbar ist.

Die Sanitärarmatur dient insbesondere der bedarfsgerechten Bereitstellung von Flüssigkeiten, wie insbesondere Wasser, an Spülbecken, Waschbecken, Duschen und/oder Badewannen. Hierzu kann der Sanitärarmatur insbesondere Kaltwasser mit einer Kaltwassertemperatur und Warmwasser mit einer Warmwassertemperatur zuführbar sein. Das Kaltwasser und Warmwasser ist durch die Sanitärarmatur insbesondere, beispielsweise mittels eines Mischventils oder einer (Thermostat-)Mischkartusche, zu Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischventil oder die (Thermostat-)Mischkartusche können durch einen Benutzer mittels eines (ersten) Betätigungselements der Sanitärarmatur, beispielsweise nach Art eines Hebels, betätigbar und/oder in einem Armaturengehäuse der Sanitärarmatur angeordnet sein. Das Armaturengehäuse besteht insbesondere zumindest teilweise aus Kunststoff und/oder (Guss-) Metall, wie zum Beispiel Messing. Das Armaturengehäuse ist an einem Träger, beispielsweise einer Arbeitsplatte, Spülbecken, Waschbecken, Badewanne oder Dusche, befestigbar. Weiterhin kann das Armaturengehäuse einen (hervorstehenden bzw. abzweigenden) Auslauf aufweisen, der starr oder bewegbar mit dem Armaturengehäuse verbunden ist. Der Auslauf kann zumindest teilweise rohrförmig ausgebildet und/oder Teil des Armaturengehäuses sein.

Die Flüssigkeit ist durch die Sanitärarmatur in einer Mehrzahl von Strahlarten abgebbar. Hierzu weist die Sanitärarmatur zumindest einen ersten Strahlbildner und einen zweiten Strahlbildner auf. Insbesondere weist die Sanitärarmatur nur den ersten Strahlbildner und den zweiten Strahlbildner auf, sodass die Flüssigkeit in der ersten Strahlart und/oder der zweiten Strahlart abgebbar ist. Bei den Strahlarten kann es sich beispielsweise um Regenstrahlen, Vollstrahlen, Massagestrahlen und/oder Perlstrahlen handeln. Insbesondere kann die Flüssigkeit bei der Benutzung der Sanitärbrause entweder in einer einzigen Strahlart oder in zwei unterschiedlichen Strahlarten gleichzeitig abgebbar sein. Die Sanitärarmatur kann je Strahlart einen Strahlbildner aufweisen. Der erste Strahlbildner und/oder der zweite Strahlbildner können zumindest eine Düse und/oder zumindest eine Auslassöffnung für die Flüssigkeit aufweisen, durch die zumindest ein für die jeweilige Strahlart spezifischer Sprühstrahl der Flüssigkeit bildbar ist.

Das Zweiwegeventil dient insbesondere zum Wechseln der Strahlart. Mit dem Zweiwegeventil kann die Flüssigkeit wahlweise dem ersten Strahlbildner und/oder dem zweiten Strahlbildner zuführbar sein. Das Zweiwegeventil kann insbesondere zumindest teilweise in dem Armaturengehäuse und/oder dem Auslauf des Armaturengehäuses der Sanitärarmatur angeordnet sein. Das Zweiwegeventil weist ein Ventilgehäuse auf, das zumindest teilweise aus Kunststoff und/oder Metall, wie zum Beispiel Messing, bestehen kann. Weiterhin kann das Zweiwegeventil beispielsweise nach Art eines Kunststoffspritzgussteils ausgebildet sein. Zudem weist das Zweiwegeventil einen Flüssigkeitszulauf für die Flüssigkeit bzw. das Mischwasser, einen ersten Flüssigkeitsablauf und zweiten Flüssigkeitsablauf auf. Der Flüssigkeitszulauf ist insbesondere flüssigkeitsleitend mit dem Mischventil oder der (Thermostat-)Mischkartusche verbindbar. Der erste Flüssigkeitsablauf kann über eine erste Ablaufleitung mit dem ersten Strahlbildner und der zweite Flüssigkeitsablauf über eine zweite Ablaufleitung mit dem zweiten Strahlbildner flüssigkeitsleitend verbindbar sein. Der erste Flüssigkeitsablauf und der zweite Flüssigkeitsablauf können zumindest teilweise parallel zueinander verlaufen und/oder parallel zueinander ausgerichtet sein. Das Zweiwegeventil weist einen Ventilkörper auf, der durch einen ersten Formgedächtnisdraht in eine erste Freigabestellung zur Freigabe des ersten Flüssigkeitsablaufs und durch einen zweiten Formgedächtnisdraht in eine zweite Freigabestellung zur Freigabe des zweiten Flüssigkeitsablaufs verstellbar ist. In der ersten Freigabestellung ist der erste Flüssigkeitsablauf geöffnet und der zweite Flüssigkeitsablauf geschlossen. Entsprechend ist in der zweiten Freigabestellung der erste Flüssigkeitsablauf geschlossen und der zweite Flüssigkeitsablauf geöffnet. Der Ventilkörper kann nach Art einer Klappe oder eines Paddels ausgebildet sein. Weiterhin kann der Ventilkörper zumindest teilweise V-förmig ausgebildet sein. Der Ventilkörper kann eine erste Dichtfläche für einen ersten Ventilsitz des ersten Flüssigkeitsablaufs und eine zweite Dichtfläche für einen zweiten Ventilsitz des zweiten Flüssigkeitsablaufs aufweisen. Bei der ersten Dichtfläche handelt es sich insbesondere um diejenige Fläche des Ventilkörpers, mit dem der Ventilkörper den ersten Ventilsitz kontaktiert, wenn sich der Ventilkörper in der zweiten Freigabestellung befindet. Bei der zweiten Dichtfläche handelt es sich entsprechend insbesondere um diejenige Fläche des Ventilkörpers, mit dem der Ventilkörper den zweiten Ventilsitz kontaktiert, wenn sich der Ventilkörper in der ersten Freigabestellung befindet. Bei dem ersten Formgedächtnisdraht und/oder zweiten Formgedächtnisdraht handelt es sich um einen Draht, der zumindest teilweise aus einer Formgedächtnislegierung besteht. Bei der Formgedächtnislegierung kann es sich beispielsweise um eine Nickel-Titan-Legierung oder eine Nickel-Titan-Kupfer-Legierung handeln. Der erste Formgedächtnisdraht und/oder der zweite Formgedächtnisdraht können sich insbesondere bei einer Erwärmung zusammenziehen und/oder bei einer Abkühlung ausdehnen. Weiterhin können der erste Formgedächtnisdraht und/oder der zweite Formgedächtnisdraht, insbesondere bei einer Temperatur von 20 °C, eine Länge von beispielsweise 50 mm (Millimeter) bis 200 mm, bevorzugt 80 mm bis 120 mm, aufweisen. Zudem können der erste Formgedächtnisdraht und/oder der zweite Formgedächtnisdraht, insbesondere bei einer Temperatur von 20 °C, einen Drahtdurchmesser von 0,1 mm bis 1 mm aufweisen. Da der erste Formgedächtnisdraht und der zweite Formgedächtnisdraht sehr dünn sind, ist das Zweiwegeventil mit einem geringen Bauraumbedarf ausbildbar.

Der Ventilkörper kann an einer Drehachse befestigt sein. Dies kann insbesondere bedeuten, dass der Ventilkörper durch die Drehachse zwischen der ersten Freigabestellung und der zweiten Freigabestellung verstellbar ist. Die Drehachse kann in dem Ventilgehäuse drehbar gelagert sein. Weiterhin kann sich die Drehachse zumindest teilweise aus dem Ventilgehäuse herauserstrecken. Zudem kann die Drehachse zwischen dem ersten Flüssigkeitsablauf und dem zweiten Flüssigkeitsablauf angeordnet sein. Insbesondere kann die Drehachse zwischen einem ersten Ablaufkanal des ersten Flüssigkeitsablaufs und einem zweiten Ablaufkanal des zweiten Flüssigkeitsablaufs angeordnet sein.

Die Drehachse kann durch den ersten Formgedächtnisdraht oder den zweiten Formgedächtnisdraht mit einem Drehwinkel von 5° bis 45° drehbar sein. Insbesondere kann die Drehachse durch den ersten Formgedächtnisdraht und/oder den zweiten Formgedächtnisdraht mit einem Drehwinkel von 5° bis 45°, bevorzugt 10° bis 20°, besonders bevorzugt (circa) 15°, drehbar sein. Insbesondere ist die Drehachse durch den ersten Formgedächtnisdraht beispielsweise in eine erste Drehrichtung und durch den zweiten Formgedächtnisdraht in eine, insbesondere entgegengesetzte, zweite Drehrichtung drehbar.

Die Drehachse kann einen ersten Hebelarm für den ersten Formgedächtnisdraht und einen zweiten Hebelarm für den zweiten Formgedächtnisdraht aufweisen. Der erste Formgedächtnisdraht ist insbesondere an dem ersten Hebelarm und der zweite Formgedächtnisdraht an dem zweiten Hebelarm befestigt. Durch ein Ziehen des ersten Formgedächtnisdrahts an dem ersten Hebelarm ist der Ventilkörper durch die Drehachse insbesondere in die erste Freigabestellung und/oder durch ein Ziehen des zweiten Formgedächtnisdrahts an dem zweiten Hebelarm ist der Ventilkörper durch die Drehachse insbesondere in die zweite Freigabestellung verstellbar.

Der erste Formgedächtnisdraht kann sich zumindest teilweise um den ersten Hebelarm oder der zweite Formgedächtnisdraht sich zumindest teilweise um den zweiten Hebelarm erstrecken. Insbesondere kann sich der erste Formgedächtnisdraht zumindest teilweise um den ersten Hebelarm und/oder der zweite Formgedächtnisdraht zumindest teilweise um den zweiten Hebelarm erstrecken. Hierzu können der erste Formgedächtnisdraht und/oder der zweite Formgedächtnisdraht zumindest teilweise nach Art einer Schlaufe oder einer Bucht ausgebildet sein. Weiterhin können sich der erste Formgedächtnisdraht beispielsweise mit einem Bogen von 45° bis 360°, bevorzugt 170° bis 190°, besonders bevorzugt (circa) 180°, um den ersten Hebelarm und/oder der zweite Formgedächtnisdraht beispielsweise mit einem Bogen von 45° bis 360°, bevorzugt 170° bis 190°, besonders bevorzugt (circa) 180°, um den zweiten Hebelarm erstrecken.

Weiterhin kann vorgesehen sein, dass:
- ein erstes längsseitiges Ende des ersten Formgedächtnisdrahts an einem ersten elektrischen Kontakt und ein zweites längsseitiges Ende des ersten Formgedächtnisdrahts an einem zweiten elektrischen Kontakt befestigt sind; oder
- ein drittes längsseitiges Ende des zweiten Formgedächtnisdrahts an einem dritten elektrischen Kontakt und ein viertes längsseitiges Ende des zweiten Formgedächtnisdrahts an einem vierten elektrischen Kontakt befestigt sind.

Die längsseitigen Enden des ersten Formgedächtnisdrahts und/oder des zweiten Formgedächtnisdrahts können an den Kontakten beispielsweise mittels einer Lötverbindung, Klemmverbindung, Schraubverbindung und/oder Crimpverbindung verbunden sein. Über die elektrischen Kontakte sind der erste Formgedächtnisdraht und/oder der zweite Formgedächtnisdraht beispielsweise mit einer elektrischen Spannung von 1 V (Volt) bis 10 V, bevorzugt 2 V bis 5 V, beaufschlagbar. Dies führt zu einer Erwärmung des ersten Formgedächtnisdrahts und/oder zweiten Formgedächtnisdrahts, sodass sich der erste Formgedächtnisdraht und/oder der zweite Formgedächtnisdraht verkürzen und dadurch an dem jeweiligen Hebelarm der Drehachse ziehen. Dies kann durch eine Steuerung, beispielsweise nach Art eines Mikrocontrollers, steuerbar sein. Die Steuerung kann mit einem (zweiten) Betätigungselement der Sanitärarmatur datenleitend verbunden sein, wobei das (zweite) Betätigungselement beispielsweise nach Art eines Sensors, wie zum Beispiel Infrarotsensor, Berührungssensor, Funksensor oder Distanzsensor, ausgebildet sein kann. Ein Benutzer der Sanitärarmatur kann den Ventilkörper durch, insbesondere berührungslose, Betätigung des (zweiten) Betätigungselements zwischen der ersten Freigabestellung und zweiten Freigabestellung verstellen und dadurch eine gewünschte Strahlart einstellen. Das (zweite) Betätigungselement kann an dem Armaturengehäuse angeordnet sein.

Der erste elektrische Kontakt, der zweite elektrische Kontakt, der dritte elektrische Kontakt oder der vierte elektrische Kontakt können an einer Leiterplatte angeordnet sein. Insbesondere können der erste elektrische Kontakt, der zweite elektrische Kontakt, der dritte elektrische Kontakt und/oder der vierte elektrische Kontakt an der Leiterplatte angeordnet sein. Weiterhin kann die Steuerung an einer Leiterplatte angeordnet sein. Die Leiterplatte ist insbesondere an dem Ventilgehäuse befestigt.

Das Zweiwegeventil weist einen ersten Magnet zum Halten des Ventilkörpers in der ersten Freigabestellung und einen zweiten Magnet zum Halten des Ventilkörpers in der zweiten Freigabestellung auf. Bei dem ersten Magnet und/oder zweiten Magnet handelt es sich um einen Permanentmagnet. Weiterhin kann der erste Magnet und/oder der zweite Magnet an einer Außenseite des Ventilgehäuses angeordnet sein.

Der erste Magnet oder der zweite Magnet können einen Schwenkarm einer Drehachse des Ventilkörpers halten. Bei der Drehachse handelt es sich insbesondere um die gleiche Drehachse, an der auch der Ventilkörper befestigt ist. Der Schwenkarm erstreckt sich insbesondere zumindest teilweise in eine radiale Richtung der Drehachse und/oder ist außerhalb des Ventilgehäuses angeordnet. Der Schwenkhebel ist durch den ersten Magnet und/zweiten Magnet magnetisch anziehbar.

Einem weiteren Aspekt folgend wird auch eine Sanitärarmatur angegeben, die zumindest Folgendes aufweist:
- ein Armaturengehäuse mit einem ersten Strahlbildner und einem zweiten Strahlbildner; und
- ein erfindungsgemäßes Zweiwegeventil, mit dem eine Flüssigkeit wahlweise dem ersten Strahlbildner oder dem zweiten Strahlbildner zuführbar ist.

Für weitere Einzelheiten zu der Sanitärarmatur wird vollumfänglich auf die Beschreibung des Zweiwegeventils verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Zweiwegeventil in einem Längsschnitt;
- Fig. 2:: das Zweiwegeventil in einer ersten Seitenansicht;
- Fig. 3:: das Zweiwegeventil zweiten Seitenansicht; und
- Fig. 4:: eine Sanitärarmatur mit dem Zweiwegeventil.

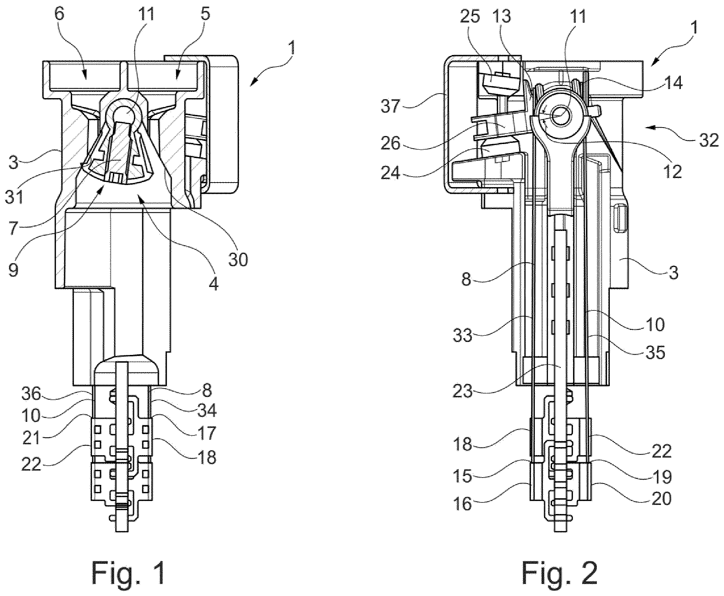

Die Fig. 1 zeigt ein Zweiwegeventil 1 in einem Längsschnitt. Das Zweiwegeventil 1 umfasst ein Ventilgehäuse 3 mit einem Flüssigkeitszulauf 4, einem ersten Flüssigkeitsablauf 5 und einem zweiten Flüssigkeitsablauf 6. In dem Ventilgehäuse 3 ist ein V-förmiger Ventilkörper 7 angeordnet, der sich in der Fig. 1 in einer ersten Freigabestellung 9 befindet. In der ersten Freigabestellung 9 ist der Ventilkörper 7 von einem ersten Ventilsitz 30 des ersten Flüssigkeitsablaufs 5 abgehoben und kontaktiert einen zweiten Ventilsitz 31 des zweiten Flüssigkeitsablaufs 6, sodass der erste Flüssigkeitsablauf 5 geöffnet und der zweite Flüssigkeitsablauf 6 geschlossen ist. Somit kann eine über den Flüssigkeitszulauf 4 zugeführte Flüssigkeit über den ersten Flüssigkeitsablauf 5 abfließen. Der Ventilkörper 7 ist schwenkbar an einer Drehachse 11 befestigt, über die der Ventilkörper 7 in eine zweite Freigabestellung verstellbar ist, in der der Ventilkörper 7 den ersten Ventilsitz 30 kontaktiert und von dem zweiten Ventilsitz 31 abgehoben ist, sodass der erste Flüssigkeitsablauf 5 geschlossen und der zweite Flüssigkeitsablauf 6 geöffnet ist.

Die Fig. 2 zeigt das Zweiwegeventil 1 in einer ersten Seitenansicht von einer im Vergleich zur Fig. 1 gegenüberliegenden Seite. Auf einer Außenseite 32 des Ventilgehäuses 3 weist die Drehachse 11 einen ersten Hebelarm 13 für einen ersten Formgedächtnisdraht 8 und einen zweiten Hebelarm 14 für einen zweiten Formgedächtnisdraht 10 auf. Der erste Hebelarm 13 und der zweite Hebelarm 14 sind an sich gegenüberliegenden Seiten der Drehachse 11 ausgebildet. Der erste Formgedächtnisdraht 8 erstreckt sich nach Art einer Schlaufe um den ersten Hebelarm 13, wobei ein erstes längsseitiges Ende 15 des ersten Formgedächtnisdrahts 8 an einem ersten elektrischen Kontakt 16 und ein in der Fig. 1 zu erkennendes zweites längsseitiges Ende 17 des ersten Formgedächtnisdrahts 8 an einem zweiten elektrischen Kontakt 18 befestigt sind. Der zweite Formgedächtnisdraht 10 erstreckt sich nach Art einer Schlaufe um den zweiten Hebelarm 14, wobei ein drittes längsseitiges Ende 19 des zweiten Formgedächtnisdrahts 10 an einem dritten elektrischen Kontakt 20 und ein in der Fig. 1 zu erkennendes viertes längsseitiges Ende 21 des zweiten Formgedächtnisdrahts 10 an einem vierten elektrischen Kontakt 22 befestigt sind. Der erste Formgedächtnisdraht 8 weist einen sich von dem ersten elektrischen Kontakt 16 zu dem ersten Hebelarm 13 erstreckenden ersten Drahtschenkel 33 und einen in der Fig. 1 zu erkennenden sich von dem ersten Hebelarm 13 zu dem zweiten elektrischen Kontakt 18 erstreckenden zweiten Drahtschenkel 34 auf. Der in der Fig. 1 zu erkennende zweite Drahtschenkel 34 des ersten Formgedächtnisdrahts 8 wird in der Fig. 2 durch den ersten Drahtschenkel 33 des ersten Formgedächtnisdrahts 8 verdeckt. Der zweite Formgedächtnisdraht 10 weist einen sich von dem dritten elektrischen Kontakt 20 zu dem zweiten Hebelarm 14 erstreckenden dritten Drahtschenkel 35 und einen in der Fig. 1 zu erkennenden sich von dem zweiten Hebelarm 14 zu dem vierten elektrischen Kontakt 22 erstreckenden vierten Drahtschenkel 36 auf. Der in der Fig. 1 zu erkennende vierte Drahtschenkel 36 des zweiten Formgedächtnisdrahts 10 wird in der Fig. 2 durch den dritten Drahtschenkel 35 des zweiten Formgedächtnisdrahts 10 verdeckt. Der erste Drahtschenkel 33 und zweite Drahtschenkel 34 einerseits sowie der dritte Drahtschenkel 35 und vierte Drahtschenkel 36 andererseits verlaufen zueinander (im Wesentlichen) parallel. Der erste Formgedächtnisdraht 8 umgibt den ersten Hebelarm 13 somit um 180° bzw. halbkreisförmig. Entsprechend umgibt der zweite Formgedächtnisdraht 10 den zweiten Hebelarm 14 um 180° bzw. halbkreisförmig. Der erste Drahtschenkel 33 des ersten Formgedächtnisdrahts 8 und der dritte Drahtschenkel 35 des zweiten Formgedächtnisdrahts 10 können eine erste Länge aufweisen, die größer ist als eine zweite Länge des zweiten Drahtschenkel 34 des ersten Formgedächtnisdrahts 8 und des vierten Drahtschenkel 36 des zweiten Formgedächtnisdrahts 10. Die erste Länge kann beispielsweise 30 mm bis 60 mm, bevorzugt 40 mm bis 50 mm, und/oder die zweite Länge 20 mm bis 50 mm, bevorzugt 30 mm bis 40 mm betragen. Der erste elektrische Kontakt 16, zweite elektrische Kontakt 18, dritte elektrische Kontakt 20 und vierte elektrische Kontakt 22 sind an einer Leiterplatte 23 angeordnet, die an dem Ventilgehäuse 3 befestigt ist. Über den ersten elektrischen Kontakt 16 und zweiten elektrischen Kontakt 18 ist der erste Formgedächtnisdraht 8 mit einer Spannung beaufschlagbar, sodass sich der erste Formgedächtnisdraht 8 verkürzt. Hierdurch zieht der erste Formgedächtnisdraht 8 an dem ersten Hebelarm 13, sodass der in der Fig. 1 gezeigte Ventilkörper 7 mit der Drehachse 11 in die erste Freigabestellung 9 gedreht wird. Über den dritten elektrischen Kontakt 20 und vierten elektrischen Kontakt 22 ist der zweite Formgedächtnisdraht 10 mit einer Spannung beaufschlagbar, sodass sich der zweite Formgedächtnisdraht 10 verkürzt. Hierdurch zieht der zweite Formgedächtnisdraht 10 an dem zweiten Hebelarm 14, sodass der in der Fig. 1 gezeigte Ventilkörper 7 mit der Drehachse 11 in die zweite Freigabestellung gedreht wird. Die Drehachse 11 ist durch den ersten Formgedächtnisdraht 8 und den zweiten Formgedächtnisdraht 10 mit einem Drehwinkel 12 drehbar. Die Drehachse 11 weist einen Schwenkarm 26 auf, der mit der Drehachse 11 schwenkbar ist. In der in der Fig. 1 gezeigten ersten Freigabestellung 9 des Ventilkörpers 7 kontaktiert der Schwenkarm 26 einen an dem Ventilgehäuse 3 befestigten ersten Magnet 24. Der erste Magnet 24 zieht den Schwenkarm 26 an, sodass der Ventilkörper 7 in der ersten Freigabestellung 9 gehalten wird. Befindet sich der Ventilkörper 7 in der zweiten Freigabestellung, kontaktiert der Schwenkarm 26 einen an dem Ventilgehäuse 3 befestigten zweiten Magnet 25. Der Schwenkarm 36 wird dann durch den zweiten Magnet 25 angezogen, sodass der Ventilkörper 7 in der zweiten Freigabestellung gehalten wird. Der erste Magnet 24, zweite Magnet 25 und Schwenkarm 26 werden durch einen an dem Ventilgehäuse 3 befestigten Sicherheitsbügel 37 geschützt.

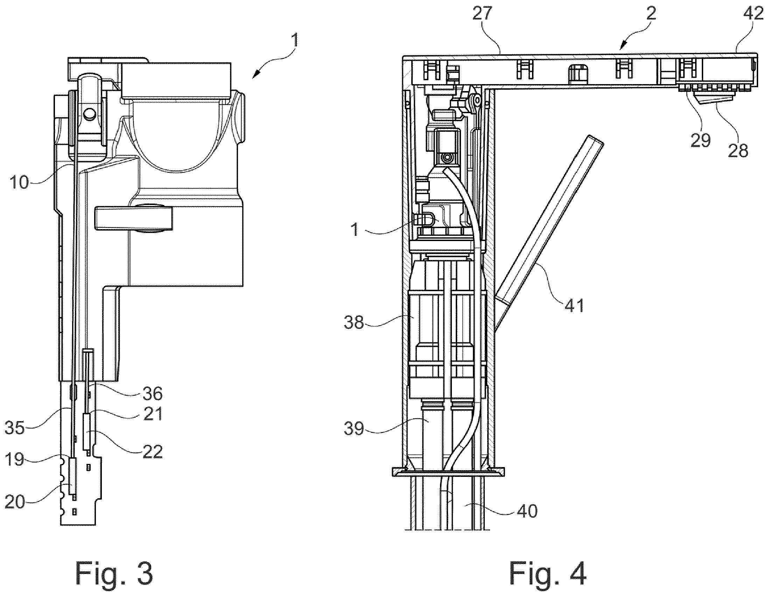

Die Fig. 3 zeigt das Zweiwegeventil 1 in einer zweiten Seitenansicht, in der das Zweiwegeventil 1 im Vergleich zur Fig. 2 um 90° nach links gedreht ist. Zu erkennen ist dadurch insbesondere der zweite Formgedächtnisdraht 10 mit dem dritten Drahtschenkel 35 und vierten Drahtschenkel 36. Das dritte längsseitige Ende 19 des zweiten Formgedächtnisdrahts 10 ist an dem dritten elektrischen Kontakt 20 und das vierte längsseitige Ende 21 des zweiten Formgedächtnisdrahts 10 an dem vierten elektrischen Kontakt 22 befestigt.

Die Fig. 4 zeigt eine Sanitärarmatur 2 in einem Längsschnitt. Die Sanitärarmatur 2 weist ein Armaturengehäuse 27 auf, in dem ein Mischventil 38 angeordnet ist. Dem Mischventil 38 ist über eine Kaltwasserleitung 39 Kaltwasser und über eine Warmwasserleitung 40 Warmwasser zuführbar. Das Kaltwasser und Warmwasser sind durch das Mischventil 38 zu einem Mischwasser mit einer gewünschten Mischwassertemperatur mischbar. Das Mischventil 38 ist über ein Betätigungselement 41 betätigbar, das hier nach Art eines Hebels ausgebildet ist. Über das Betätigungselement 41 ist die Mischwassertemperatur und eine Abgabemenge des Mischwassers einstellbar. Ein hier nicht zu erkennender Mischwasserauslass des Mischventils 38 ist mit dem in der Fig. 1 gezeigten Flüssigkeitszulauf 4 des Zweiwegeventils 1 verbunden. Das Zweiwegeventil 1 ist ebenfalls innerhalb des Armaturengehäuses 27 angeordnet. Der in der Fig. 1 gezeigte erste Flüssigkeitsablauf 5 des Zweiwegeventils 1 ist mit einem ersten Strahlbildner 28 der Sanitärarmatur 2 und der zweite Flüssigkeitsablauf 6 des Zweiwegeventils 1 mit einem zweiten Strahlbildner 29 der Sanitärarmatur 2 verbunden. Somit ist das Mischwasser durch das Zweiwegeventil 1 wahlweise dem ersten Strahlbildner 28 oder dem zweiten Strahlbildner 29 zuführbar. Zudem weist die Sanitärarmatur 2 einen Sensor 42 auf, der hier nach Art eines Infrarotsensors ausgebildet ist. Der Sensor 42 ist datenleitend mit einer Steuerung der Sanitärarmatur 2 verbunden, durch die das Zweiwegeventil 1 steuerbar ist. Ein Benutzer der Sanitärarmatur 2 kann durch Betätigung des Sensors 42 das Zweiwegeventil 1 umstellen, sodass das Mischwasser entweder über den ersten Strahlbildner 28 oder den zweiten Strahlbildner 29 abgebbar ist.

Die vorliegende Erfindung ermöglicht insbesondere die Ausbildung eines Zweiwegeventils mit einem geringen Bauraumbedarf.

### Bezugszeichenliste

- 1: Zweiwegeventil
- 2: Sanitärarmatur
- 3: Ventilgehäuse
- 4: Flüssigkeitszulauf
- 5: erster Flüssigkeitsablauf
- 6: zweiter Flüssigkeitsablauf
- 7: Ventilkörper
- 8: erster Formgedächtnisdraht
- 9: erste Freigabestellung
- 10: zweiter Formgedächtnisdraht
- 11: Drehachse
- 12: Drehwinkel
- 13: erster Hebelarm
- 14: zweiter Hebelarm
- 15: erstes längsseitiges Ende
- 16: erster elektrischer Kontakt
- 17: zweites längsseitiges Ende
- 18: zweiter elektrischer Kontakt
- 19: drittes längsseitiges Ende
- 20: dritter elektrischer Kontakt
- 21: viertes längsseitiges Ende
- 22: vierter elektrischer Kontakt
- 23: Leiterplatte
- 24: erster Magnet
- 25: zweiter Magnet
- 26: Schwenkarm
- 27: Armaturengehäuse
- 28: erster Strahlbildner
- 29: zweiter Strahlbildner
- 30: erster Ventilsitz
- 31: zweiter Ventilsitz
- 32: Außenseite
- 33: erster Drahtschenkel
- 34: zweiter Drahtschenkel
- 35: dritter Drahtschenkel
- 36: vierter Drahtschenkel
- 37: Sicherheitsbügel
- 38: Mischventil
- 39: Kaltwasserleitung
- 40: Warmwasserleitung
- 41: Betätigungselement
- 42: Sensor

## Patentansprüche

1. Zweiwegeventil (1) für eine Sanitärarmatur (2), zumindest aufweisend:
- ein Ventilgehäuse (3) mit einem Flüssigkeitszulauf (4), einem ersten Flüssigkeitsablauf (5) und einem zweiten Flüssigkeitsablauf (6);
- einen Ventilkörper (7), der durch einen ersten Formgedächtnisdraht (8) in eine erste Freigabestellung (9) zur Freigabe des ersten Flüssigkeitsablaufs (5) und durch einen zweiten Formgedächtnisdraht (10) in eine zweite Freigabestellung zur Freigabe des zweiten Flüssigkeitsablaufs (6) verstellbar ist; und
- in kennzeichnender Weise aufweisend einen ersten Magneten (24) zum Halten des Ventilkörpers (7) in der ersten Freigabestellung (9) und einen zweiten Magneten (25) zum Halten des Ventilkörpers (7) in der zweiten Freigabestellung, wobei der erste Magnet (24) und/oder der zweite Magnet (25) ein Permanentmagnet ist.

2. Zweiwegeventil (1) nach Patentanspruch 1, wobei der Ventilkörper (7) an einer Drehachse (11) befestigt ist.

3. Zweiwegeventil (1) nach Patentanspruch 2, wobei die Drehachse (11) durch den ersten Formgedächtnisdraht (8) oder den zweiten Formgedächtnisdraht (10) mit einem Drehwinkel (12) von 5° bis 45° drehbar ist.

4. Zweiwegeventil (1) nach Patentanspruch 2 oder 3, wobei die Drehachse (11) einen ersten Hebelarm (13) für den ersten Formgedächtnisdraht (8) und einen zweiten Hebelarm (14) für den zweiten Formgedächtnisdraht (10) aufweist.

5. Zweiwegeventil (1) nach Patentanspruch 4, wobei der erste Formgedächtnisdraht (8) sich zumindest teilweise um den ersten Hebelarm (13) oder der zweite Formgedächtnisdraht (10) sich zumindest teilweise um den zweiten Hebelarm (14) erstreckt.

6. Zweiwegeventil (1) nach einem der vorhergehenden Patentansprüche, wobei:
- ein erstes längsseitiges Ende (15) des ersten Formgedächtnisdrahts (8) an einem ersten elektrischen Kontakt (16) und ein zweites längsseitiges Ende (17) des ersten Formgedächtnisdrahts (8) an einem zweiten elektrischen Kontakt (18) befestigt sind; oder
- ein drittes längsseitiges Ende (19) des zweiten Formgedächtnisdrahts (10) an einem dritten elektrischen Kontakt (20) und ein viertes längsseitiges Ende (21) des zweiten Formgedächtnisdrahts (10) an einem vierten elektrischen Kontakt (22) befestigt sind.

7. Zweiwegeventil (1) nach Patentanspruch 6, wobei der erste elektrische Kontakt (16), der zweite elektrische Kontakt (18), der dritte elektrische Kontakt (20) oder der vierte elektrische Kontakt (22) an einer Leiterplatte (23) angeordnet ist.

8. Zweiwegeventil (1) nach einem der vorhergehenden Patentansprüche, wobei der erste Magnet (24) oder der zweite Magnet (25) einen Schwenkarm (26) einer Drehachse (11) des Ventilkörpers (7) hält.

9. Sanitärarmatur (2), zumindest aufweisend:
- ein Armaturengehäuse (27) mit einem ersten Strahlbildner (28) und einem zweiten Strahlbildner (29); und
- ein Zweiwegeventil (1) nach einem der vorhergehenden Patentansprüche, mit dem eine Flüssigkeit wahlweise dem ersten Strahlbildner (28) oder dem zweiten Strahlbildner (29) zuführbar ist.

## Claims

1. A two-way valve (1) for a sanitary fitting (2), having at least:
- one valve housing (3) with a liquid inflow port (4), a first liquid outlet port (5) and a second liquid outlet port (6);
- one valve body (7) that can be shifted by a first shape memory wire (8) to a first release position (9) to release the first liquid outlet port (5) and by a second shape memory wire (10) to a second release position to release the second liquid outlet port (6); and
- in a characterizing manner having a first magnet (24) for holding the valve body (7) in the first release position (9) and a second magnet (25) for holding the valve body (7) in the second release position, wherein the first magnet (24) and/or the second magnet (25) is a permanent magnet.

2. The two-way valve (1) according to claim 1, wherein the valve body (7) is secured to a rotary shaft (11).

3. The two-way valve (1) according to claim 2, wherein the rotary shaft (11) can be rotated by the first shape memory wire (8) or the second shape memory wire (10) with a rotation angle (12) of 5° to 45°.

4. The two-way valve (1) according to claim 2 or 3, wherein the rotary shaft (11) has a first lever arm (13) for the first shape memory wire (8) and a second lever arm (14) for the second shape memory wire (10).

5. The two-way valve (1) according to claim 4, wherein the first shape memory wire (8) extends at least partially around the first lever arm (13) or the second shape memory wire (10) extends at least partially around the second lever arm (14).

6. The two-way valve (1) according to any one of the preceding claims, wherein:
- a first longitudinal end (15) of the first shape memory wire (8) is secured to a first electrical contact (16) and a second longitudinal end (17) of the first shape memory wire (8) is secured to a second electrical contact (18); or
- a third longitudinal end (19) of the second shape memory wire (10) is secured to a third electrical contact (20) and a fourth longitudinal end (21) of the second shape memory wire (10) is secured to a fourth electrical contact (22).

7. The two-way valve (1) according to claim 6, wherein the first electrical contact (16), the second electrical contact (18), the third electrical contact (20) or the fourth electrical contact (22) is arranged on a printed circuit board (23).

8. The two-way valve (1) according to any one of the preceding claims, wherein the first magnet (24) or the second magnet (25) holds a pivot arm (26) of a rotary shaft (11) of the valve body (7).

9. A sanitary fitting (2), having at least:
- one fitting housing (27) with a first jet-forming element (28) and a second jet-forming element (29); and
- one two-way valve (1) according to any one of the preceding claims, with which a liquid can be selectively supplied to the first jet-forming element (28) or to the second jet-forming element (29).

## Revendications

1. Vanne à deux voies (1), destinée à une robinetterie sanitaire (2), comportant au moins :
- un carter de vanne (3) pourvu d'une arrivée (4) de liquide, d'une première évacuation (5) de liquide et d'une deuxième évacuation (6) de liquide ;
- un corps de vanne (7), qui est ajustable par un premier fil à mémoire de forme (8) dans une première position de libération (9), destinée à libérer la première évacuation (5) de liquide et par un deuxième fil à mémoire de forme (10) dans une deuxième position de libération, destinée à libérer la deuxième évacuation (6) de liquide ; et
- comportant de manière caractéristique un premier aimant (24), destiné à maintenir le corps de vanne (7) dans la première position de libération (9) et un deuxième aimant (25), destiné à maintenir le corps de vanne (7) dans la deuxième position de libération, le premier aimant (24) et / ou le deuxième aimant (25) étant un aimant permanent.

2. Vanne à deux voies (1) selon la revendication 1 du brevet, le corps de vanne (7) étant fixé sur un axe de rotation (11).

3. Vanne à deux voies (1) selon la revendication 2 du brevet, l'axe de rotation (11) étant rotatif par le premier fil à mémoire de forme (8) ou par le deuxième fil à mémoire de forme (10) avec un angle de rotation (12) de 5° à 45°.

4. Vanne à deux voies (1) selon la revendication 2 ou 3, l'axe de rotation (11) comportant un premier bras de levier (13) pour le premier fil à mémoire de forme (8) et un deuxième bras de levier (14) pour le deuxième fil à mémoire de forme (10).

5. Vanne à deux voies (1) selon la revendication 4, le premier fil à mémoire de forme (8) s'étendant au moins partiellement autour du premier bras de levier (13) ou le deuxième fil à mémoire de forme (10) s'étendant au moins partiellement autour du deuxième bras de levier (14).

6. Vanne à deux voies (1) selon l'une quelconque des revendications précédentes du brevet :
- une première extrémité (15) longitudinale du premier fil à mémoire de forme (8) étant fixée sur un premier contact (16) électrique et une deuxième extrémité (17) longitudinale du premier fil à mémoire de forme (8) étant fixée sur un deuxième contact (18) électrique ; ou
- une troisième extrémité (19) longitudinale du deuxième fil à mémoire de forme (10) étant fixée sur un troisième contact (20) électrique et une quatrième extrémité (21) longitudinale du deuxième fil à mémoire de forme (10) étant fixée sur un quatrième contact (22) électrique.

7. Vanne à deux voies (1) selon la revendication 6, le premier contact (16) électrique, le deuxième contact (18) électrique, le troisième contact (20) électrique ou le quatrième contact (22) électrique étant placé sur une carte de circuit imprimé (23).

8. Vanne à deux voies (1) selon l'une quelconque des revendications précédentes du brevet, le premier aimant (24) ou le deuxième aimant (25) maintenant un bras pivotant (26) d'un axe de rotation (11) du corps de vanne (7).

9. Robinetterie sanitaire (2), comportant au moins :
- un carter de robinetterie (27) pourvu d'un premier générateur de jet (28) et d'un deuxième générateur de jet (29) ; et
- une vanne à deux voies (1) selon l'une quelconque des revendications précédentes du brevet, à l'aide de laquelle un liquide peut être amené sélectivement vers le premier générateur de jet (28) ou vers le deuxième générateur de jet (29).
